# EUROPEAN PATENT APPLICATION

(11) **EP 4 317 916 A1**
(43) Date of publication of application: **07.02.2024**
(21) Application number: 21927054.3
(22) Date of filing: 31.03.2021
(51) Int. Cl.: G01C 21/36

(54) **INFORMATION PROCESSING PROGRAM, INFORMATION PROCESSING METHOD, STORAGE MEDIUM, APPLICATION DEVICE, AND DATA STRUCTURE**

(71) Applicant: Pioneer Corporation, Tokyo 113-0021 (JP)
(72) Inventor: NAKAMURA, Takeshi, Kawagoe-shi Saitama 3508555 (JP)
(74) Representative: Hoffmann Eitle
(86) International application number: PCT/JP2021/014043
(87) International publication number: WO 2022/208811

(57) **Abstract**

An information processing program is an information processing program that causes a computer to execute a process including an intent generating step of generating intent information that includes character string information that indicates a character string constituting a notification text that is output, as a voice output, to a driver of a moving object, and aiming information that indicates a type of a notification and that is set in each of the character strings; and a transmitting step of transmitting the intent information to an information processing apparatus that generates the notification text based on the intent information.

## Description

### Field

The present invention relates to an information processing program, an information processing method, a storage medium, an application device, and a data structure.

### Background

Conventionally, there is a known technology for controlling a plurality of types of voice output in the case where the plurality of types of voice output are present at the same time. For example, whether or not to able to wait an output of later output voice information is determined in accordance with a temporal relationship based on the relationship between an estimated time of completion of a delivery of meaningful content of first output voice information and an allowable period of time of a delay between an occurrence of an output request for the later output voice information and a start of the output. Furthermore, there is a known technology for allowing an output of the later output voice information to be waited under the condition in which it is determined that the waiting is available, and outputting the later output voice information after having performed an output of the first output voice information with priority.

### Citation List

### Patent Literature

Patent Literature 1: Japanese Patent No. 6020189 Summary

### Technical Problem

However, the conventional technology described above just simply output the later output voice information after having performed the output of the first output voice information with priority; therefore, it is not always able to output both of the first output voice information and the later output voice information within a desired period of time. In other words, in the conventional technology described above, it is not always able to complete a delivery of information needed for a user within a desired period of time.

Furthermore, in the conventional technology described above, there is a problem in that it is difficult to understand the content caused by a voice interruption, or there is a problem in that a case in which a response from a user is needed is not considered.

The present invention has been conceived in light of the circumstances described above and an object thereof is to provide an information processing program, an information processing method, a storage medium, an application device, and a data structure capable of appropriately delivering information that is needed for a driver of a moving object.

### Solution to Problem

An information processing program for causing a computer, executes an intent generating step of generating intent information that includes character string information that indicates a character string constituting a notification text that is output, as a voice output, to a driver of a moving object, and aiming information that indicates a type of a notification and that is set in each of the character strings, and a transmitting step of transmitting the intent information to an information processing apparatus that generates the notification text based on the intent information.

An information processing method performed by an information processing apparatus, the method includes an intent generating step of generating intent information that includes character string information that indicates a character string constituting a notification text that is output, as a voice output, to a driver of a moving object, and aiming information that indicates a type of a notification and that is set in each of the character strings, and a transmitting step of transmitting the intent information to an information processing apparatus that generates the notification text based on the intent information.

A storage medium having stored therein an information processing program for causing a computer, executes an intent generating step of generating intent information that includes character string information that indicates a character string constituting a notification text that is output, as a voice output, to a driver of a moving object, and aiming information that indicates a type of a notification and that is set in each of the character strings, and a transmitting step of transmitting the intent information to an information processing apparatus that generates the notification text based on the intent information.

An application device, includes an intent generation unit that generates intent information that includes character string information that indicates a character string constituting a notification text that is output, as a voice output, to a driver of a moving object, and aiming information that indicates a type of a notification and that is set in each of the character strings, and a transmission unit that transmits the intent information to an information processing apparatus that generates the notification text based on the intent information.

A data structure that is used for a process of generating a notification text performed by an information processing apparatus including a generation unit that generates the notification text that is output, as a voice output, to a driver of a moving object, the data structure includes character string information that indicates a character string constituting the notification text, and aiming information that indicates a type of a notification and that is set in each of the character strings, wherein the data structure causes the generation unit to generate length information on a length needed for the notification based on the character string information and the aiming information and the notification text based on the length information on the length needed for the notification, and an output postponement timing that indicates a timing at which the notification of the notification text is to be completed.

### Brief Description of Drawings

FIG. 1 is a diagram illustrating a configuration example of an information processing system according to an embodiment.
FIG. 2 is a diagram illustrating a configuration example of an application device according to the embodiment.
FIG. 3 is a diagram illustrating a configuration example of an information processing apparatus according to the embodiment.
FIG. 4 is a diagram illustrating an outline of information processing according to the embodiment.
FIG. 5 is a diagram illustrating an example of intent information according to the embodiment.
FIG. 6 is a diagram illustrating an example of intent information according to the embodiment.
FIG. 7 is a diagram illustrating an example of intent information according to the embodiment.
FIG. 8 is a flowchart illustrating the flow of information processing according to the embodiment.
FIG. 9 is a hardware configuration diagram illustrating an example of a computer that implements a function of the application device or the information processing apparatus. Description of Embodiments

Modes for carrying out the present invention (hereinafter, referred to as an embodiment) of will be explained with reference to the accompanying drawings. Furthermore, the present invention is not limited by the embodiments described below. In addition, the same reference numerals are assigned to the same components in the drawings.

### Embodiment

### 1. Configuration of information processing system

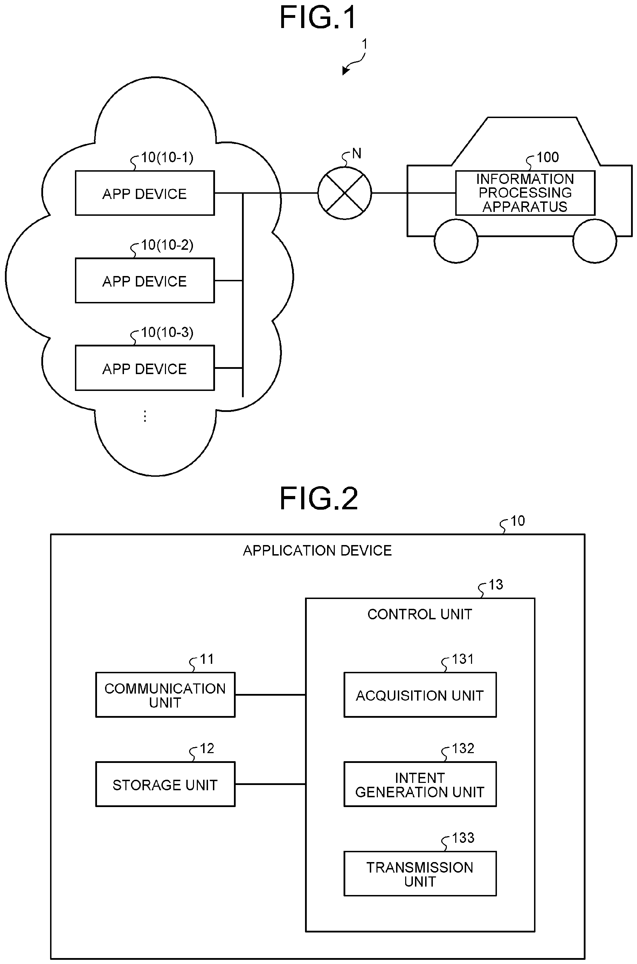

First, a configuration of an information processing system according to an embodiment will be described with reference to FIG. 1. FIG. 1 is a diagram illustrating a configuration example of the information processing system according to the embodiment. As illustrated in FIG. 1, in the information processing system 1, an application device 10 (hereinafter, also referred to as an app device 10) and an information processing apparatus 100 are included. The app device 10 and the information processing apparatus 100 are connected via a predetermined network N so as to be able to communicate with each other in a wired or wireless manner. Furthermore, in the information processing system 1 illustrated in FIG. 1, a plurality of the app devices 10 or a plurality of the information processing apparatuses 100 may be included.

The application device 10 is an information processing apparatus that executes an application that provides information to a driver of a vehicle (an example of a moving object) and is implemented by, for example, a server device or a cloud system. FIG. 1 illustrates a case in which the application device 10 is implemented by the cloud system. Furthermore, in a description below, an example in which the moving object is a vehicle will be described; however, the moving object is not limited to a vehicle. The technology according to the present disclosure is applicable to various manufactured products. For example, the technology according to the present disclosure may be implemented as a device mounted on any one of the types of moving objects including an automobile, an electric vehicle, a hybrid electric vehicle, a two-wheeled vehicle, a bicycle, a personal mobility device, an airplane, a drone, a ship, a robot, or the like.

Furthermore, in a description below, the application device 10 is explained as app devices 10-1 and 10-2 in accordance with a type of an application executed in the application device 10. For example, the app device 10-1 is the application device 10 in which an application #1 (hereinafter, also referred to as an app #1) is executed. Furthermore, for example, the app device 10-2 is the application device 10 in which an application #2 (hereinafter, also referred to as an app #2) is executed. Furthermore, in a description below, the app devices 10-1 and 10-2 are referred to as the application device 10 in the case where the app devices 10-1 and 10-2 are not particularly distinguished in a description.

The information processing apparatus 100 is a stationary navigation device or a stationary drive recorder installed in, for example, a vehicle. Moreover, the information processing apparatus 100 is not limited to the navigation device or the drive recorder. For the information processing apparatus 100, a portable mobile terminal, such as a smartphone, that is used by a crew member of a vehicle may be applied.

### 2. Configuration of application device

In the following, a configuration of an application device according to the embodiment will be described with reference to FIG. 2. FIG. 2 is a diagram illustrating a configuration example of the application device according to the embodiment. As illustrated in FIG. 2, the application device 10 includes a communication unit 11, a storage unit 12, and a control unit 13.

### Communication unit 11

The communication unit 11 is implemented by, for example, a network interface card (NIC), or the like. Furthermore, the communication unit 11 is connected to the network N (see FIG. 1) in a wired or wireless manner.

### Storage unit 12

The storage unit 12 is implemented by, for example, a semiconductor memory device, such as a random access memory (RAM) or a flash memory, or a storage device, such as a hard disk or an optical disk. For example, the storage unit 12 stores therein information related to a machine learning model that is used to generate intent information. Furthermore, the storage unit 12 stores therein app priority information that indicates an app priority that is set in each of the applications.

Furthermore, the storage unit 12 stores therein state information including sensor information, such as location information on a vehicle; guidance route information including a search route, a destination, and the like; interest and attention information on a user; schedule information on a user; or the like in such a manner as to be associated with the ID of the information processing apparatus 100 (an example of identification information for identifying the information processing apparatus 100 mounted on each of the vehicles).

### Control unit 13

The control unit 13 is a controller and is implemented by, for example, a central processing unit (CPU), a micro processing unit (MPU), an application specific integrated circuit (ASIC), a field programmable gate array (FPGA), or the like executing, in a storage area, such as a RAM, as a work area, various programs (corresponding to an example of an information processing program) stored in a storage device included in the application device 10. In the example illustrated in FIG. 2, the control unit 13 includes an acquisition unit 131, an intent generation unit 132, and a transmission unit 133.

### Acquisition unit 131

The acquisition unit 131 acquires various kinds of information. For example, the acquisition unit 131 acquires a machine learning model that outputs intent information in response to an input of an app notification text. For example, the acquisition unit 131 acquires a machine learning model that has been learned on the basis of learning data that includes a combination of an app notification text and the intent information. If the acquisition unit 131 acquires the machine learning model, the acquisition unit 131 stores the information related to the acquired machine learning model in the storage unit 12.

Furthermore, the acquisition unit 131 acquires, from the information processing apparatus 100 via the communication unit 11, sensor information including location information or the like on the information processing apparatus 100, a result of voice recognition of a user who is riding on a vehicle, or the like.

### Intent generation unit 132

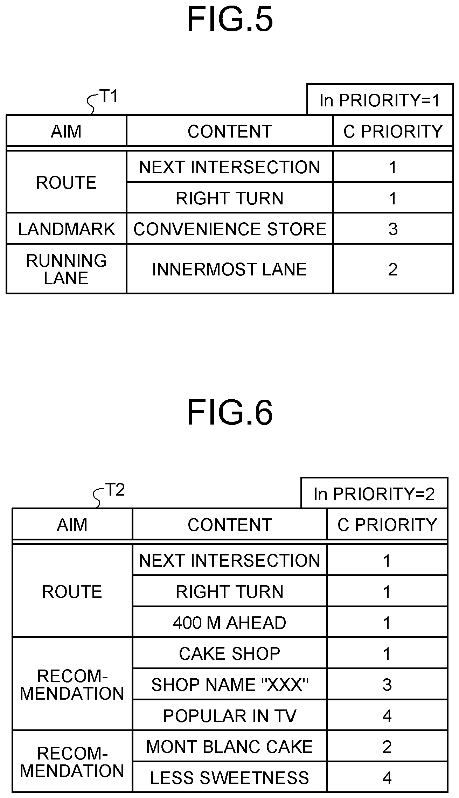

The intent generation unit 132 generates intent information that is metadata information associated with the information related to a notification text that is output, as a voice output, to a driver of the moving object. Here, the intent information according to the embodiment will be described with reference to FIG. 5 to FIG. 7. FIG. 5 to FIG. 7 are diagrams each illustrating the intent information according to the embodiment.

The intent generation unit 132 generates an app notification text related to a notification. In the example illustrated in FIG. 5, the intent generation unit 132 generates, on the basis of the guidance route information or the location information on the information processing apparatus 100, an app notification text #13 indicating that "please make a right turn at the next intersection. A convenience store A is a landmark. Please run on the innermost lane." If the intent generation unit 132 generates the app notification text #13, the intent generation unit 132 generates intent information T1 on the basis of the generated app notification text #13.

For example, the intent generation unit 132 extracts character strings from the app notification text #13.
Subsequently, the intent generation unit 132 generates the intent information T1 that includes the extracted character strings. In the example illustrated in FIG. 5, the intent generation unit 132 refers to the storage unit 12 and acquires a machine learning model #1 that outputs character strings indicating notification content in response to an input of an app notification text. For example, the intent generation unit 132 acquires the machine learning model #1 that has been learned on the basis of learning data that includes a combination of the app notification text and the character strings that indicate the notification content. If the intent generation unit 132 acquires the machine learning model #1, the intent generation unit 132 inputs the app notification text #13 to the acquired machine learning model #1, and acquires the character strings that indicate notification content, such as a "next intersection", a "right turn", a "convenience store", and the "innermost lane", that is output from the machine learning model #1. The intent generation unit 132 generates the intent information T1 that includes the acquired character strings.

Alternatively, instead of using the machine learning model, the intent generation unit 132 may extract a character string from the app notification text by using the technology related to natural language processing, such as a morphological analysis. For example, the intent generation unit 132 performs morphological analysis on the app notification text ##13, and then, extracts the words, such as a "beyond this point", an "intersection", a "right turn", the "convenience store A", "most", and "inner side", from an app notification text #1. Subsequently, the intent generation unit 132 checks the extracted words against predetermined dictionary information, and determines a type of a part of speech of the word, a type of the inflected form, a synonym, or the like. Subsequently, the intent generation unit 132 generates, on the basis of the result of checking the extracted words against the predetermined dictionary information, the intent information T1 that includes the character strings, such as the "next intersection", the "right turn", the "convenience store", and the "innermost lane", that indicate the notification content.

Furthermore, the intent generation unit 132 generates the intent information including aiming information that indicates the type of a notification that is set in each of the character strings. For example, the intent generation unit 132 refers to the storage unit 12, and acquires a machine learning model #2 that outputs, for each character string in response to an input of the app notification text, the aiming information that indicates the type of a notification. For example, the intent generation unit 132 acquires the machine learning model #2 that has been learned on the basis of the learning data that includes a combination of the app notification text and the aiming information that is set in each of the character strings. For example, in the case where the app notification text is input, the intent generation unit 132 acquires a machine learning model #3 that has been learned such that a character string that indicates the type of a notification that is set in each of the character strings is output as output information.

If the intent generation unit 132 acquires the machine learning model #2, the intent generation unit 132 inputs the app notification text #1 to the acquired machine learning model #2, and acquires the aiming information that is set in each of the character strings and that is output from the machine learning model #2. In FIG. 5, regarding the character strings of the "next intersection" and the "right turn", the intent generation unit 132 acquires the aiming information that corresponds to the character string of the "route" that indicates the type of a notification. Furthermore, regarding the character string of the "convenience store", the intent generation unit 132 acquires the aiming information that corresponds to the character string of the "landmark" that indicates the type of a notification. Furthermore, regarding the character string of the "innermost lane", the intent generation unit 132 acquires the aiming information that corresponds to the character string of a "running lane" that indicates the type of a notification. The intent generation unit 132 generates the intent information T1 including the aiming information that is set in each of the acquired character strings.

Furthermore, the intent generation unit 132 generates the intent information that includes content priority information that indicates a content priority that is set in each of the character strings. For example, the intent generation unit 132 refers to the storage unit 12 and acquires the machine learning model #3 that outputs, for each character string in response to an input of the app notification text, the content priority information that indicates the content priority. For example, the intent generation unit 132 acquires the machine learning model #3 that has been learned on the basis of the learning data that includes a combination of the app notification text and the content priority information that is set in each of the character strings. For example, in the case where the app notification text is input, the intent generation unit 132 acquires the machine learning model #3 that has been learned so as to output, as output information, numerical digits (for example, numerical digits, such as 1, 2, 3, and ..., in the order in which the priority is high) each of which indicates the content priority that is set in each of the character strings.

If the intent generation unit 132 acquires the machine learning model #3, the intent generation unit 132 inputs the app notification text #1 to the acquired machine learning model #3, and acquires the content priority information that is set in each of the character strings and that has been output from the machine learning model #3. In FIG. 5, regarding the character strings of the "next intersection" and the "right turn", the intent generation unit 132 acquires the content priority information that corresponds to the numerical digit of "1" indicating the content priority. Furthermore, regarding the character string of the "convenience store", the intent generation unit 132 acquires the content priority information that corresponds to the numerical digit of "3" indicating the content priority. Furthermore, regarding the character string of the "innermost lane", the intent generation unit 132 acquires the content priority information that corresponds to the numerical digit of "2" indicating the content priority. The intent generation unit 132 generates the intent information T1 including the content priority information that is set in each of the acquired character strings.

Furthermore, the intent generation unit 132 generates the intent information that further includes the notification priority information that indicates the notification priority that is set in each of the pieces of intent information. For example, the intent generation unit 132 refers to the storage unit 12 and acquires a machine learning model #4 that outputs the notification priority information in response to an input of the app notification text. For example, the intent generation unit 132 acquires the machine learning model #4 that has been learned on the basis of the learning data that includes a combination of the app notification text and the notification priority information. For example, in the case where the app notification text is input, the intent generation unit 132 acquires the machine learning model #4 that has been learned such that numerical digits (for example, numerical digits, such as 1, 2, 3, and ..., in the order in which the priority is high) that indicate the notification priority of the notification related to the app notification text are output as output information.

If the intent generation unit 132 acquires the machine learning model #4, the intent generation unit 132 inputs the app notification text #1 to the acquired machine learning model #4, and acquires the notification priority information that is output from the machine learning model #4. In FIG. 5, regarding the notification related to the app notification text #1, the intent generation unit 132 acquires notification priority information (In priority) that corresponds to the numerical digit of "1" that indicates the notification priority. The intent generation unit 132 generates the intent information T1 including the acquired notification priority information.

Furthermore, the intent generation unit 132 generates the intent information that further includes the app priority information that indicates the app priority that is set in each of the applications each of which generates the intent information. Although not illustrated, in FIG. 5, the intent generation unit 132 refers to the storage unit 12 and acquires the app priority information that indicates the app priority that is set in the application #1. For example, the intent generation unit 132 acquires the numerical digits (for example, numerical digits, such as 1, 2, 3, and ..., in the order in which the priority is high) each of which indicates the app priority that is set in each of the applications. In FIG. 5, the intent generation unit 132 acquires the app priority information that correspond to the numerical digit of "1" and that indicates the app priority. The intent generation unit 132 generates the intent information T1 including the acquired app priority information.

Furthermore, the intent generation unit 132 may decide, on the basis of the notification priority information and the app priority information, overall priority information that indicates the overall priority of the intent information. For example, the intent generation unit 132 may calculate an average value obtained by adding and averaging the numerical digits indicating the notification priority and the numerical digits indicating the app priority, and may define the calculated average value as the overall priority information that indicates the overall priority of the intent information. Although not illustrated, in FIG. 5, the intent generation unit 132 defines the average value "1" that is obtained by adding and averaging the numerical digit of "1" that indicates the notification priority and the numerical digit of "1" that indicates the app priority as the overall priority information that indicates the overall priority of the intent information T1.

In the example illustrated in FIG. 6, the intent generation unit 132 generates, on the basis of the location information on the information processing apparatus 100, an app notification text #24 indicating that "after turning right at the intersection ahead, there is a cake shop named "XXX" 400 m ahead that is a hot topic on TV recently. A recommendation is a Mont Blanc cake with less sweetness". Subsequently, in a similar manner to that in the case described above in FIG. 5, the intent generation unit 132 generates intent information T2 on the basis of the app notification text #24. Specifically, the intent generation unit 132 generates the intent information T2 that includes the character strings, such as a "next intersection", a "right turn", "400 m ahead", a "cake shop", a "shop name "XXX", a "popular in TV", the "Mont Blanc cake", and "less sweetness", that indicate the notification content.

Furthermore, in FIG. 6, regarding the character strings of the "next intersection", the "right turn", and "400 m ahead", the intent generation unit 132 acquires the aiming information that corresponds to the character string of the "route" that indicates the type of a notification. Furthermore, regarding the character strings of the "cake shop", the "shop name "XXX", and "popular in TV", the intent generation unit 132 acquires the aiming information that corresponds to the character string of "recommendation" that indicates the type of a notification. Furthermore, regarding the character strings of the "Mont Blanc cake" and "less sweetness", the intent generation unit 132 acquires the aiming information that corresponds to the character string of "recommendation" that indicates the type of a notification. The intent generation unit 132 generates the intent information T2 that includes the aiming information that is set in each of the acquired character strings.

Furthermore, in FIG. 6, regarding the character strings of the "next intersection", the "right turn", "400 m ahead" and the "cake shop", the intent generation unit 132 acquires the content priority information that corresponds to the numerical digit of "1" that indicates the content priority. Furthermore, regarding the character string of the "shop name "XXX", the intent generation unit 132 acquires the content priority information that corresponds to the numerical digit of "3" that indicates the content priority. Furthermore, regarding the character strings of "popular in TV" and "less sweetness", the intent generation unit 132 acquires the content priority information that corresponds to the numerical digit of "4" that indicates the content priority. Furthermore, regarding the character string of the "Mont Blanc cake", the intent generation unit 132 acquires the content priority information that corresponds to the numerical digit of "2" that indicates the content priority. The intent generation unit 132 generates the intent information T2 that includes the content priority information that is set in each of the acquired character strings.

Furthermore, in FIG. 6, regarding a notification related to an app notification text #2, the intent generation unit 132 acquires notification priority information (In priority) that corresponds to the numerical digit of "2" that indicates the notification priority. The intent generation unit 132 generates the intent information T2 that includes the acquired notification priority information.

Furthermore, although not illustrated, in FIG. 6, the intent generation unit 132 refers to the storage unit 12, and acquires the app priority information that corresponds to the numerical digit of "2" that indicates the app priority that is set in the application #2. The intent generation unit 132 generates the intent information T2 including the acquired app priority information.

Furthermore, although not illustrated, in FIG. 6, the intent generation unit 132 defines the average value "2" that is obtained by adding and averaging the numerical digit of "2" indicating the notification priority and the numerical digit of "2" indicating the app priority as the overall priority information that indicates the overall priority of the intent information T2.

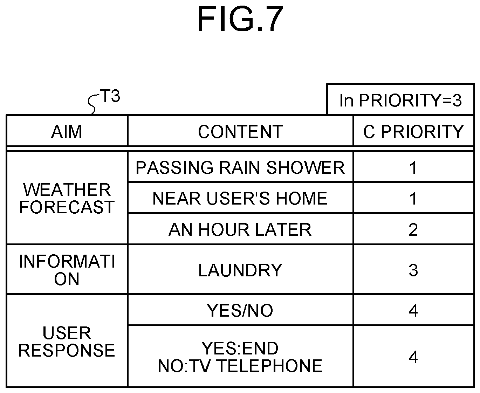

In the example illustrated in FIG. 7, the intent generation unit 132 generates an app notification text #34 indicating that "a passing rain shower is predicted near your home in an hour. Have you brought the laundry in? (if the response of the user is "no", a TV telephone is connected to the user's home./if the response of the user is "yes", an end)". Subsequently, the intent generation unit 132 generates intent information T3 on the basis of the app notification text #34, in a similar manner to that used in the case described above with reference to FIG. 5. Specifically, the intent generation unit 132 generates the intent information T3 that includes the character strings, such as "passing rain shower", "near user's home", "one hour later", "laundry", "Yes/No", and "Yes: finish, No: TV telephone", that indicate the notification content.

Furthermore, in FIG. 7, regarding the character strings of "passing rain shower", "near user's home", and "one hour later", the intent generation unit 132 acquires the aiming information that corresponds to the character string of the "weather forecast" that indicates the type of a notification. Furthermore, regarding the character string of the "laundry", the intent generation unit 132 acquires the aiming information that corresponds to the character string of the "information" that indicates the type of a notification. Furthermore, regarding the character strings of "Yes/No" and "Yes: finish, No: TV telephone", the intent generation unit 132 acquires the aiming information that corresponds to the character string of the "user response" that indicates the type of a notification. The intent generation unit 132 generates the intent information T3 that includes the aiming information that is set in each of the acquired character string.

Furthermore, in FIG. 7, regarding the character strings of "passing rain shower" and "near user's home", the intent generation unit 132 acquires the content priority information that corresponds to the numerical digit of "1" that indicates the content priority. Furthermore, regarding the character string of "one hour later", the intent generation unit 132 acquires the content priority information that corresponds to the numerical digit of "2" that indicates the content priority. Furthermore, regarding the character string of "laundry", the intent generation unit 132 acquires the content priority information that corresponds to the numerical digit of "3" that indicates the content priority. Furthermore, regarding the character strings of "Yes/No" and "Yes: finish, No: TV telephone", the intent generation unit 132 acquires the content priority information that corresponds to the numerical digit of "4" that indicates the content priority. The intent generation unit 132 generates the intent information T3 that includes the content priority information that is set in each of the acquired character strings.

Furthermore, in FIG. 7, regarding the notification related to an app notification text #3, the intent generation unit 132 acquires the notification priority information (In priority) that corresponds to the numerical digit of "3" indicating the notification priority. The intent generation unit 132 generates the intent information T3 that includes the acquired notification priority information.

Furthermore, although not illustrated, in FIG. 7, the intent generation unit 132 refers to the storage unit 12 and acquires the app priority information that corresponds to the numerical digit of "3" that indicates the app priority that is set in the application #3. The intent generation unit 132 generates the intent information T3 that includes the acquired app priority information.

Furthermore, although not illustrated, in FIG. 7, the intent generation unit 132 defines the average value "3" that is obtained by adding and averaging the numerical digit of "3" indicating the notification priority and the numerical digit of "3" indicating the app priority as the overall priority information that indicates the overall priority of the intent information T3.

### Transmission unit 133

The transmission unit 133 transmits the intent information to the information processing apparatus 100 that generates the notification text on the basis of the intent information. For example, if the intent information is generated by the intent generation unit 132, the transmission unit 133 transmits the intent information to the information processing apparatus 100. For example, if the pieces of intent information T1 to T3 are generated by the intent generation unit 132, the transmission unit 133 transmits the pieces of intent information T1 to T3 to the information processing apparatus 100.

### 3. Configuration of information processing apparatus

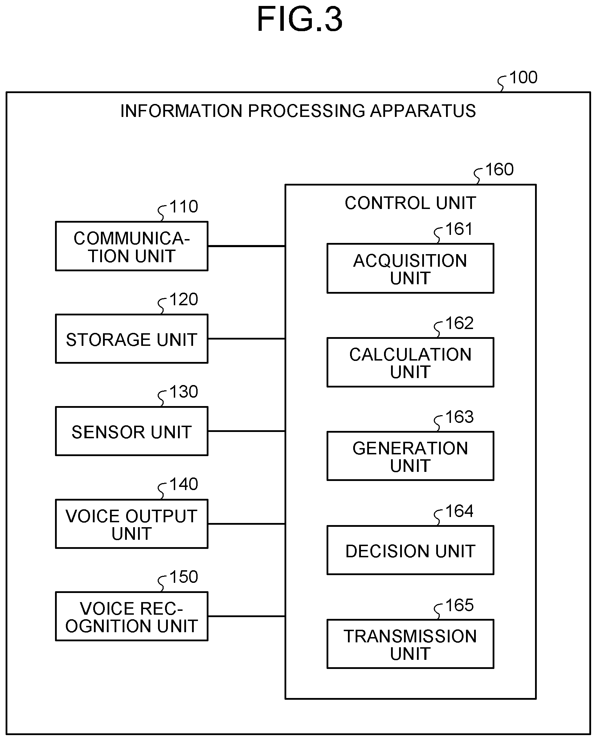

In the following, a configuration of the information processing apparatus according to the embodiment will be described with reference to FIG. 3. FIG. 3 is a diagram illustrating a configuration example of the information processing apparatus according to the embodiment. As illustrated in FIG. 3, the information processing apparatus 100 includes a communication unit 110, a storage unit 120, a sensor unit 130, a voice output unit 140, a voice recognition unit 150, and a control unit 160.

### Communication unit 110

The communication unit 110 is implemented by, for example, a NIC, a modem chip, an antenna module, or the like. Furthermore, the communication unit 110 is connected to the network N (see FIG. 1) in a wired or wireless manner.

### Storage unit 120

The storage unit 120 is implemented by, for example, a semiconductor memory device, such as a RAM or a flash memory, or a storage device, such as a hard disk or an optical disk.

### Sensor unit 130

The sensor unit 130 includes various sensors. For example, the sensor unit 130 includes a global navigation satellite system (GNSS). A GNSS sensor uses the GNSS and receives radio waves that includes positioning purpose data that is transmitted from a navigation satellite. The positioning purpose data is used to detect an absolute position of a vehicle from the latitude and longitude information or the like. Moreover, the GNSS that is used may be, for example, a global positioning system (GPS) or may be another system. Furthermore, the sensor unit 130 outputs the positioning purpose data generated by the GNSS sensor to the control unit 160.

Furthermore, the sensor unit 130 includes a vehicle speed sensor. The vehicle speed sensor detects a running speed of a vehicle and generates vehicle speed data in accordance with the running speed. Furthermore, the sensor unit 130 outputs the vehicle speed data generated by the vehicle speed sensor to the control unit 160.

Furthermore, the sensor unit 130 includes an acceleration sensor. The acceleration sensor detects an acceleration of the vehicle, and generates acceleration data in accordance with the running acceleration. The sensor unit 130 outputs the acceleration data generated by the acceleration sensor to the control unit 160. Furthermore, the sensor unit 130 may calculate a speed on the basis of the acceleration data.

Furthermore, the sensor unit 130 includes a camera. The camera generates a capturing image by capturing the vicinity of the vehicle under the control of the control unit 160. Furthermore, the sensor unit 130 outputs the capturing image generated by the camera to the control unit 160.

### Voice output unit 140

The voice output unit 140 includes a speaker, converts a digital voice signal that is input from the control unit 160 to an analog voice signal by performing digital/analog (D/A) conversion, and outputs the voice that is in accordance with the analog voice signal from the speaker.

Furthermore, the voice output unit 140 outputs, as a voice output to the driver, a notification text that has been generated by a generation unit 163. Specifically, the voice output unit 140 outputs, as a voice output, a plurality of app notification texts in the order in which the app notification texts are decided by the generation unit 163.

### Voice recognition unit 150

The voice recognition unit 150 is implemented by executing a voice recognition application stored in the storage unit 120 by the control unit 160. Furthermore, the voice recognition unit 150 performs voice recognition on a speech of the driver. Furthermore, the voice recognition unit 150 performs a process of converting the speech of the driver that is received by a microphone that constitutes a part of a voice input unit (not illustrated) to text data. Furthermore, the conversion process to the text data may be performed in a dedicated server that is not illustrated.

Furthermore, the voice recognition unit 150 includes a barge-in function. If it has been decided, by a decision unit 164, to enable the barge-in function, the voice recognition unit 150 enables the barge-in function. In contrast, if it has been decided, by the decision unit 164, not to enable the barge-in function, the voice recognition unit 150 disables the barge-in function.

### Control unit 160

The control unit 160 is a controller and is implemented by, for example, a CPU, an MPU, an ASIC, an FPGA, or the like executing, in a storage area, such as a RAM, as a work area, various programs (corresponding to an example of the information processing program) stored in a storage device included in the information processing apparatus 100. In the example illustrated in FIG. 3, the control unit 160 includes an acquisition unit 161, a calculation unit 162, the generation unit 163, and the decision unit 164.

### Acquisition unit 161

The acquisition unit 161 acquires various kinds of information. Specifically, the acquisition unit 161 acquires status information that includes running information about the running status of a moving object and driving information about the driving status of a driver. For example, the acquisition unit 161 acquires, from the sensor unit 130, as an example of the running information, information about a running speed of a moving object, a running vehicle density, traffic jam information, a road type (an express highway, a town street, a community road, a suburban road, a mountain road, a straight road, an intersection, a curved road, etc.), and time and weather (daytime, nighttime, sunny, rain, snow, snowfall accumulation, freeze, etc.). Furthermore, the acquisition unit 161 may acquire, from an external information providing device, information related to the traffic jam information, the road type (an express highway, a town street, a community road, a suburban road, a mountain road, a straight road, an intersection, a curved road, etc.), and time and weather (daytime, nighttime, sunny, rain, snow, snowfall accumulation, freeze, etc.).

Furthermore, the acquisition unit 161 acquires, as an example of the driving information, attribute information on a driver, presence or absence of a fellow passenger, attribute information on the fellow passenger. For example, the acquisition unit 161 acquires the attribute information on a driver or the attribute information on a fellow passenger that are previously registered in a predetermined database. Furthermore, the acquisition unit 161 may acquire information related to presence or absence of a fellow passenger from a driver by a self-declaration from the driver.

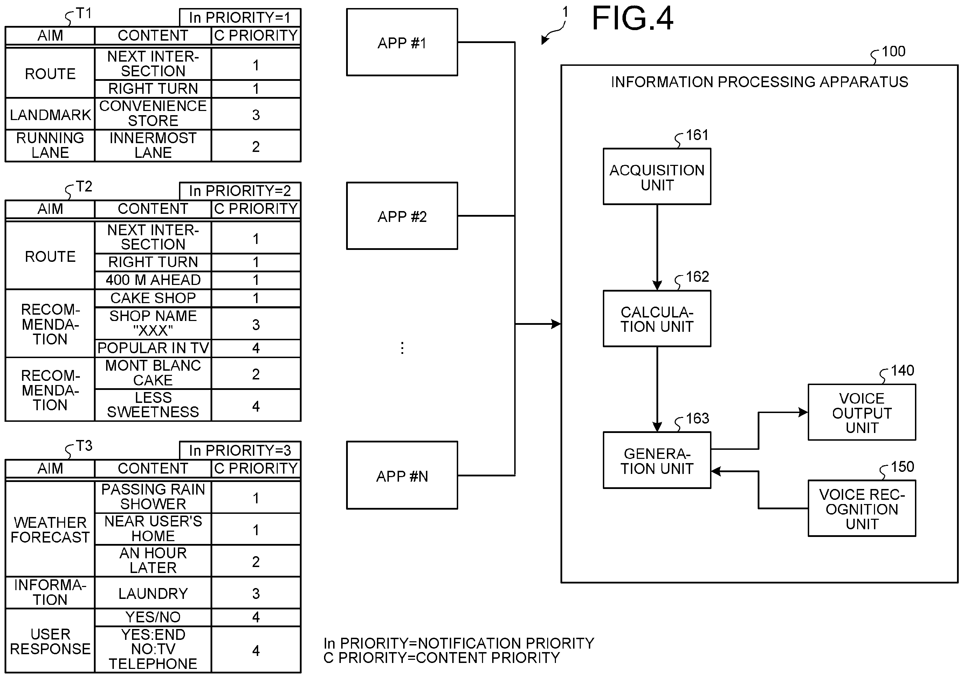

Furthermore, the acquisition unit 161 acquires pieces of intent information from each of the plurality of applications. Here, an outline of information processing performed by the information processing apparatus 100 will be described with reference to FIG. 4. FIG. 4 is a diagram illustrating an outline of information processing according to the embodiment. In the example illustrated in FIG. 4, the acquisition unit 161 included in the information processing apparatus 100 simultaneously acquires the pieces of intent information T1 to T3 from the three applications #1 to #3, respectively.

For example, the acquisition unit 161 acquires, from the application, intent information that includes the character string information that indicates a character string constituting a notification text that is output, as a voice output, to a driver of a moving object and the aiming information that indicates the type of a notification that is set in each of the character strings. Furthermore, the acquisition unit 161 acquires the intent information that further includes the content priority information that indicates the content priority that is set in each of the character strings. Furthermore, the acquisition unit 161 acquires the intent information that further includes the notification priority information that indicates the notification priority that is set in each of the piece of intent information. Furthermore, the acquisition unit 161 acquires the intent information that further includes the app priority information that indicates the app priority that is set in each of the applications.

Furthermore, the acquisition unit 161 acquires an output postponement timing that indicates the timing at which a notification of the notification text is to be completed. Here, the output postponement timing may be a time point at which a notification of the notification text is to be completed or may be a location at which the notification of the notification text is to be completed. For example, the acquisition unit 161 acquires the output postponement timing on the basis of the intent information acquired from the application. For example, the acquisition unit 161 acquires, on the basis of the intent information T1, the information corresponding to the "next intersection" as the output postponement timing of the notification text related to the intent information T1. Furthermore, the acquisition unit 161 acquires, on the basis of the intent information T2, the information corresponding to the "next intersection" and the information corresponding to the "cake shop" as the output postponement timing of the notification text related to the intent information T2. Furthermore, the acquisition unit 161 acquires, on the basis of the intent information T3, the information corresponding to "one hour later" as the output postponement timing of the notification text related to the intent information T3.

### Calculation unit 162

The calculation unit 162 calculates the output postponement time that is the remaining time before an arrival of the output postponement timing. Specifically, the calculation unit 162 calculates the output postponement time on the basis of the output postponement timing that has been acquired by the acquisition unit 161. For example, if the output postponement timing is a predetermined time point, the calculation unit 162 calculates, as the output postponement time, a remaining period of time between the current time point and the predetermined time point that is the output postponement timing. Furthermore, if the output postponement timing is a predetermined location, the calculation unit 162 calculates, as the output postponement time, an estimated period of time of an arrival between the current location and an arrival that is made at the predetermined location that corresponds to the output postponement timing. For example, the calculation unit 162 calculates the estimated period of time of the arrival on the basis of the distance to the predetermined location and an expected average speed of the moving object.

Furthermore, the calculation unit 162 calculates, on the basis of the status information acquired by the acquisition unit 161, the degree of safety that indicates the degree of safety of the running status of a moving object or the driving status of a driver. For example, the calculation unit 162 calculates such that the degree of safety is calculated to be higher as a vehicle speed is lower. Furthermore, for example, the calculation unit 162 calculates such that the degree of safety is calculated to be higher in the case where a vehicle is running on a suburban road as compared to the case where the vehicle is running on a town street.

Furthermore, the calculation unit 162 calculates, on the basis of the status information acquired by the acquisition unit 161, the degree of allowance that indicates the degree of allowance in which a driver is able to give an attention to a matter other than a matter of driving a moving object. For example, the calculation unit 162 calculates such that the degree of allowance is calculated to be higher in the case where a vehicle is running on a straight road as compared to the case where the vehicle is running on a road that is not a straight road. Furthermore, for example, the calculation unit 162 calculates such that the degree of allowance is calculated to be lower in the case where the weather is rainy as compared to the case where the weather is sunny.

Subsequently, if the calculation unit 162 calculates the degree of safety and the degree of allowance, the calculation unit 162 calculates the output postponement time on the basis of the calculated degree of safety and the degree of allowance. Specifically, the calculation unit 162 calculates such that the output postponement time is calculated to be longer as the degree of safety is higher. For example, the calculation unit 162 calculates such that the output postponement time is calculated to be longer than the estimated period of time of the arrival as the degree of safety is higher. Furthermore, the calculation unit 162 calculates such that the output postponement time is calculated to be longer as the degree of allowance is higher. For example, the calculation unit 162 calculates such that the output postponement time is calculated to be longer than the estimated period of time of the arrival as the degree of safety is higher.

### Generation unit 163

The generation unit 163 generates, on the basis of the intent information, a notification text that is output, as a voice output, to a driver. For example, the generation unit 163 generates, on the basis of the character string information and the aiming information that are included in the intent information, a notification text that is output, as a voice output, to the driver. More specifically, the generation unit 163 generates, on the basis of the character string information and the aiming information, a notification text including the character string, and changes the expression of the notification text such that the timing at which the voice output of the generated notification text has been completed is before the output postponement timing. The generation unit 163 generates a notification text that can be played back within the output postponement time by changing an expression of the notification text.

For example, the generation unit 163 generates a tentative notification text including the character strings, and, if the playback time of the tentative notification text does not exceed the output postponement time, the generation unit 163 changes the expression of the notification text to a more polite expression than the tentative notification text. For example, on the basis of the character strings of the "next intersection" and the "right turn" and on the basis of the character string of the "route" that corresponds to the aiming information associated with the character strings of the "next intersection" and the "right turn" that are included in the intent information T1 illustrated in FIG. 5, the generation unit 163 generates a tentative notification text indicating "make a right turn at the next intersection" having a playback time of 2 seconds. At this time, if the output postponement time is 3 seconds, the playback time (2 seconds) of the tentative notification text does not exceed the output postponement time (3 seconds), so that the generation unit 163 changes the expression of the notification text to an expression of "please make a right turn at the next intersection" (playback time of 2.5 seconds) that is a more polite expression than the tentative notification text.

Furthermore, the generation unit 163 generates the tentative notification text including the character strings, and, if the playback time of the tentative notification text exceeds the output postponement time, the generation unit 163 changes the expression of the notification text to the style of the writing that does not include an auxiliary verb at the end of the sentence. For example, on the basis of the character strings of the "next intersection" and the "right turn" and on the basis of the character string of the "route" that corresponds to the aiming information associated with the character strings of the "next intersection" and the "right turn" that are included in the intent information T1 illustrated in FIG. 5, the generation unit 163 generates the tentative notification text indicating that "please make a right turn at the next intersection" having a playback time of 2.5 seconds. At this time, if the output postponement time is 2 seconds, the playback time (2.5 seconds) of the tentative notification text exceeds the output postponement time (2 seconds), so that the generation unit 163 changes the expression of the notification text to the style of the writing of "make a right turn at the next intersection" (playback time of 2 seconds) that does not include an auxiliary verb at the end of the sentence. Furthermore, if the playback time of the tentative notification text exceeds the output postponement time, the generation unit 163 may change the expression of the notification text to the style of the writing by ending a sentence with a noun or noun phrase.

Furthermore, the generation unit 163 generates, on the basis of the character string information, the aiming information, and the content priority information, a notification text that is output, as a voice output, to the driver. Specifically, the generation unit 163 generates a notification text that includes a character string on the basis of the content priority such that the voice output of the notification text is completed before the output postponement timing. More specifically, the generation unit 163 generates a tentative notification text that includes a plurality of character strings each having a different content priority, and generates, if the playback time of the tentative notification text exceeds the output postponement time, a notification text that is able to be played back within the output postponement time by sequentially deleting the character strings in ascending order of the content priority out of the plurality of character strings that are included in the tentative notification text.

For example, the generation unit 163 generates a tentative notification text indicating that "please make a right turn at the next intersection. A convenience store A is a landmark. Please run on the innermost lane." that includes all of the character strings that are included in the intent information T1 illustrated in FIG. 5, i.e., the character strings of the "next intersection" and the "right turn" each having the content priority of "1", the character string of the "innermost lane" having the content priority of "2", and the character string of the "convenience store" having the content priority of "3". Subsequently, the generation unit 163 estimates that the playback time of the tentative notification text is 8 seconds.

At this time, if the output postponement time is 7 seconds, the playback time (8 seconds) of the tentative notification text exceeds the output postponement time (7 seconds), so that the generation unit 163 deletes the character string of "convenience store" having a low content priority of "3" out of the plurality of character strings included in the tentative notification text. Subsequently, the generation unit 163 generates the tentative notification text indicating that "please make a right turn at the next intersection. Please run on the innermost lane." that includes the character strings of the "next intersection" and the "right turn" each having the content priority of "1", and the character string of the "innermost lane" having the content priority of "2". Subsequently, the generation unit 163 estimates that the playback time of the tentative notification text is 6 seconds. The playback time (6 seconds) of the tentative notification text does not exceed the output postponement time (7 seconds), so that the generation unit 163 uses the generated tentative notification text as a notification text.

Furthermore, the generation unit 163 generates each of the plurality of different app notification texts on the basis of the plurality of pieces of different intent information that are acquired from the plurality of respective different applications, and decides to output, as a voice output on the basis of the notification priority information acquired by the acquisition unit 161, the app notification texts in the order the app notification texts that have been generated on the basis of the intent information that has a higher notification priority out of the plurality of app notification texts.

For example, the generation unit 163 generates, on the basis of pieces of intent information #1 to #3 acquired from the three different applications #1 to #3, respectively, each of three different app notification texts #1' to #3'. Subsequently, the generation unit 163 acquires, from the notification priority information that is included in each of the pieces of intent information #1 to #3, pieces of information indicating that the notification priority of the application #1 is "1", the notification priority of the application #2 is "2", and the notification priority of the application #3 is "3". Subsequently, in the case where the generation unit 163 outputs, as a voice output, the notification text including the three app notification texts #1' to #3', the generation unit 163 decides to output, as a voice output, the app notification text #1' first that that has been generated on the basis of the intent information #1 that has the highest notification priority; output, as a voice output, the app notification text #2' second time that that has been generated on the basis of the intent information #2 that has the second highest notification priority; and output, as a voice output, the app notification text #3' last time that that has been generated on the basis of the intent information #3 that has the lowest notification priority.

Furthermore, instead of the notification priority, the generation unit 163 may decide the order of the plurality of app notification texts to be output, as a voice output, on the basis of the app priority. Specifically, the generation unit 163 generates each of the plurality of different app notification texts on the basis of the plurality of respective different pieces of intent information acquired from the plurality of respective different applications, and decides to output, as a voice output, the app notification texts in the order of the app notification texts related to the applications having higher app priority out of the plurality of app notification texts on the basis of the pieces of app priority information acquired by the acquisition unit 161.

For example, the generation unit 163 acquires, from the app priority information included in each of the pieces of intent information #1 to #3, information indicating that the app priority of the application #1 is "1", the app priority of the application #2 is "2", and the app priority of the application #3 is "3". Subsequently, in the case where the generation unit 163 outputs, as a voice output, the notification text including the three app notification texts #1' to #3', the generation unit 163 decides to output, as a voice output, the app notification text #1' first that that has been generated on the basis of the intent information #1 that has the highest app priority; output, as a voice output, the app notification text #2' second time that that has been generated on the basis of the intent information #2 that has the second highest app priority; and output, as a voice output, the app notification text #3' last time that that has been generated on the basis of the intent information #3 having the lowest app priority.

Furthermore, instead of the notification priority or the app priority, the generation unit 163 may decide, on the basis of the overall priority indicating the comprehensive priority, the order in which the plurality of app notification texts are to be output as the voice output. Specifically, the generation unit 163 generates the plurality of different app notification texts on the basis of the plurality of respective different pieces of intent information acquired from the plurality of respective different applications, and decides to output, as a voice output, the app notification texts in the order of the app notification texts related to the application having a higher overall priority on the basis of the overall priority information acquired by the acquisition unit 161 out of the plurality of app notification texts.

For example, the generation unit 163 acquires, from the overall priority information included in each of the pieces of intent information #1 to #3, the information indicating that the overall priority of the application #1 is "1", the overall priority of the application #2 is "2", and the overall priority of the application #3 is "3". Subsequently, in the case where the generation unit 163 outputs, as a voice output, the notification text that includes the three app notification texts #1' to #3', the generation unit 163 decides to output, as a voice output, the app notification text #1' first that has been generated on the basis of the intent information #1 that has the highest overall priority; output, as a voice output, the app notification text #2' second time that has been generated on the basis of the intent information #2 that has the second highest overall priority; and output, as a voice output, the app notification text #3' last time that has been generated on the basis of the intent information #3 that has the lowest overall priority.

Furthermore, the generation unit 163 generates, on the basis of each of the pieces of intent information acquired from the respective applications, all of the app notification texts that are able to be generated. For example, on the basis of the intent information T1 that is illustrated in FIG. 5 and that has been acquired from the application #1, the generation unit 163 generates two app notification texts #11' and #11 indicating that "make a right turn at the next intersection" (playback time of 2 seconds) and "please make a right turn at the next intersection " (playback time of 2.5 seconds), respectively, that include only the character strings each having the content priority of "1". Furthermore, the generation unit 163 generates an app notification text #12 indicating that "please make a right turn at the next intersection. Please run on the innermost lane." (playback time of 6 seconds) that includes the character string having the content priority that is equal to or less than "2". Furthermore, the generation unit 163 generates an app notification text #13 indicating that "please make a right turn at the next intersection. A convenience store A is a landmark. Please run on the innermost lane." that includes the character string including all of the notification priorities. In this way, the generation unit 163 generates, on the basis of the intent information T1, all of the app notification texts #11', #11, #12, and #13 that are able to be generated.

Furthermore, on the basis of the intent information T2 that is illustrated in FIG. 6 and that has been acquired from the application #2, the generation unit 163 generates two app notification texts #21' and #21 indicating that "after turning right at the intersection ahead, a cake shop at 400 m" and "after turning right at the intersection ahead, there is a cake shop 400 m ahead", respectively, that include only the character strings each having the content priority of "1". Furthermore, the generation unit 163 generates an app notification text #22 indicating that "after turning right at the intersection ahead, there is a cake shop 400 m ahead. A recommendation is a Mont Blanc cake." that includes the character string having the content priority that is equal to or less than "2". Furthermore, the generation unit 163 generates an app notification text #23 indicating that "after turning right at the intersection ahead, there is a cake shop named "XXX" 400 m ahead. A recommendation is a Mont Blanc cake with less sweetness." that includes the character string having the content priority that is equal to or less than "3". Furthermore, the generation unit 163 generates an app notification text #24 indicating that "after turning right at the intersection ahead, there is a cake shop named "XXX" 400 m ahead that is a hot topic on TV recently. A recommendation is a Mont Blanc cake with less sweetness." that includes the character string having all of the notification priorities. In this way, the generation unit 163 generates, on the basis of the intent information T2, all of the app notification texts #21', #21, #22, #23, and #24 that are able to be generated.

Furthermore, on the basis of the intent information T3 that is illustrated in FIG. 7 and that has been acquired from the application #3, the generation unit 163 generates an app notification text #31 indicating that "a passing rain shower is predicted near your home." that includes only the character strings each having the content priority of "1". Furthermore, the generation unit 163 generates an app notification text #32 indicating that "a passing rain shower is predicted near your home in an hour." that includes the character string having the content priority that is equal to or less than "2". Furthermore, the generation unit 163 generates an app notification text #33 indicating that "a passing rain shower is predicted near your home in an hour. Have you brought the laundry in?" that includes a character string having the content priority that is equal to or less than "3". Furthermore, the generation unit 163 generates the app notification text #34 indicating "a passing rain shower is predicted near your home in an hour. Have you brought the laundry in? (if the response of the user is "no", a TV telephone is connected to the user's home./if the response of the user is "yes", an end)" that includes the character string having all of the notification priorities. In this way, the generation unit 163 generates, on the basis of the intent information T3, all of the app notification texts #31, #32, #33, and #34 that are able to be generated.

Subsequently, if the generation unit 163 generates all of the app notification texts that are able to be generated, the generation unit 163 estimates the playback time of each of the app notification texts. For example, the generation unit 163 estimates the playback time of each of the app notification texts #11', #11, #12, #13, #21', #21, #22, #23, #24, #31, #32, #33, and #34 that are able to be generated.

Subsequently, if the generation unit 163 estimates the playback time of each of the app notification texts, the generation unit 163 selects the app notification text in which the playback time is the longest from among each of the app notification texts. For example, the generation unit 163 selects the app notification text #13 that is the longest notification text out of the notification texts related to the app #1, the app notification text #24 that is the longest notification text out of the notification texts related to the app #2, and the app notification text #34 that is the longest notification text out of the notification texts related to the app #3.

Subsequently, if the generation unit 163 selects the app notification text in which the playback time is the longest from among each of the app notification texts, the generation unit 163 estimates the total playback time of the notification text including all of the selected app notification texts. For example, the generation unit 163 estimates the total playback time of the notification text that includes all of the selected app notification text #13, the app notification text #24, and the app notification text #34. Subsequently, the generation unit 163 determines whether or not the total playback time of the notification text is less than or equal to the output postponement time.

If the generation unit 163 determines that the total playback time of the notification text is less than or equal to the output postponement time, the generation unit 163 decides to output the selected app notification text. If the generation unit 163 decides to output the selected app notification text, the generation unit 163 generates the notification text that includes all of the selected app notification texts.

In contrast, if the generation unit 163 determines that the total playback time of the notification text is not less than or equal to the output postponement time, the generation unit 163 sequentially selects the second shortest app notification text in ascending order of the app priority (or, the notification priority or the overall priority may be possible). For example, if the generation unit 163 determines that the total playback time of the notification text that includes all of the selected app notification text #13, the app notification text #24, and the app notification text #34 are not less than or equal to the output postponement time, the generation unit 163 selects, instead of the app notification text #34, the second shortest app notification text #33 in ascending order of the app priority associated with the app #3. Subsequently, if the generation unit 163 sequentially selects the second shortest app notification text in ascending order of the app priority, the generation unit 163 estimates the total playback time of the notification text that includes all of the selected app notification texts.

In this way, the generation unit 163 generates the tentative notification text that includes the plurality of app notification texts each having a different app priority (or, a notification priority or an overall priority may be possible), and, if the total playback time of the tentative notification text exceeds the output postponement time, the generation unit 163 generate a notification text that is able to be played back within the output postponement time by sequentially shortening the length of the app notification texts in ascending order of the app priority (or, a notification priority or an overall priority may be possible) out of the plurality of app notification texts included in the tentative notification text.

### Decision unit 164

In the case where the decision unit 164 outputs, to a driver as a voice output on the basis of the status information acquired by the acquisition unit 161, a notification text related to the notification content asking for a response from the driver, the decision unit 164 decides the acceptance time at which the response to the notification text can be accepted from the driver. Specifically, the decision unit 164 decides the acceptance time on the basis of a comparison between the playback time of the notification text generated by the generation unit 163 and the output postponement time calculated by the calculation unit 162. More specifically, if the total playback time of the tentative notification text that includes the character string generated by the generation unit 163 is longer than the output postponement time by an amount less than a predetermined time, the decision unit 164 decides that the acceptance time is short.

If it is decided, by the decision unit 164, that the acceptance time is short, the generation unit 163 generates a notification text that includes only the numbers allocated to choices that allow for a selection to be made by the driver and the items of the choices. For example, the generation unit 163 generates a notification text that includes only "1", "2", and "3", which are the numbers allocated to the choices, and "Italian food", "Chinese food", and "Japanese food", which are the items of the choices, such as "ahead from here, there are recommended restaurants of 1. Italian, 2. Chinese, and 3. Japanese foods. Which restaurant would you like?".

Furthermore, if the total playback time of the tentative notification text is longer than the output postponement time by an amount longer than or equal to the predetermined time, the decision unit 164 decides that the acceptance time is not available. If it is decided, by the decision unit 164, that the acceptance time is not available, the generation unit 163 generates a notification text that does not include the notification content asking for a response from a driver. For example, if it is decided, by the decision unit 164, that the acceptance time is not available, the generation unit 163 generates, instead of the app notification text #34 indicating "a passing rain shower is predicted near your home in an hour. Have you brought the laundry in? (if the response of the user is "no", a TV telephone is connected to the user's home./if the response of the user is "yes", an end)" including a user response, an app notification text #34' indicating that "a passing rain shower is predicted near your home in an hour. Have you brought the laundry in?" from which a portion of the user response and the subsequent portion are deleted.

Furthermore, the decision unit 164 decides the acceptance time on the basis of the degree of safety and the degree of allowance that are calculated by the calculation unit 162. For example, the decision unit 164 decides to set the acceptance time longer as the degree of safety calculated by the calculation unit 162 is higher. Furthermore, the decision unit 164 decides to set acceptance time longer as the degree of allowance calculated by the calculation unit 162 is higher.

Furthermore, the decision unit 164 decides, on the basis of the status information acquired by the acquisition unit 161, whether or not to enable the barge-in function of the voice recognition unit 150. Specifically, on the basis of the degree of safety and the degree of allowance that are calculated by the calculation unit 162, the decision unit 164 decides whether or not to enable the barge-in function of the voice recognition unit 150. For example, if the degree of safety calculated by the calculation unit 162 exceeds the first threshold, the decision unit 164 decides to enable the barge-in function. Furthermore, if the degree of allowance calculated by the calculation unit 162 exceeds the second threshold, the decision unit 164 decides to enable the barge-in function.

### Transmission unit 165

A transmission unit 165 transmits the information acquired by the acquisition unit 161 to the application device 10. Specifically, the transmission unit 165 transmits, to the application device 10, the status information that includes the running information that is related to the running status of a moving object and the driving information that is related to the driving status of a driver, both of which are acquired by the acquisition unit 161. For example, the transmission unit 165 transmits the status information to the application device 10 in real time. Furthermore, for example, the transmission unit 165 may transmit the status information to the application device 10 at predetermined time intervals (for example, every 30 seconds, every 1 minute, etc.).

### 4. Flow of information processing

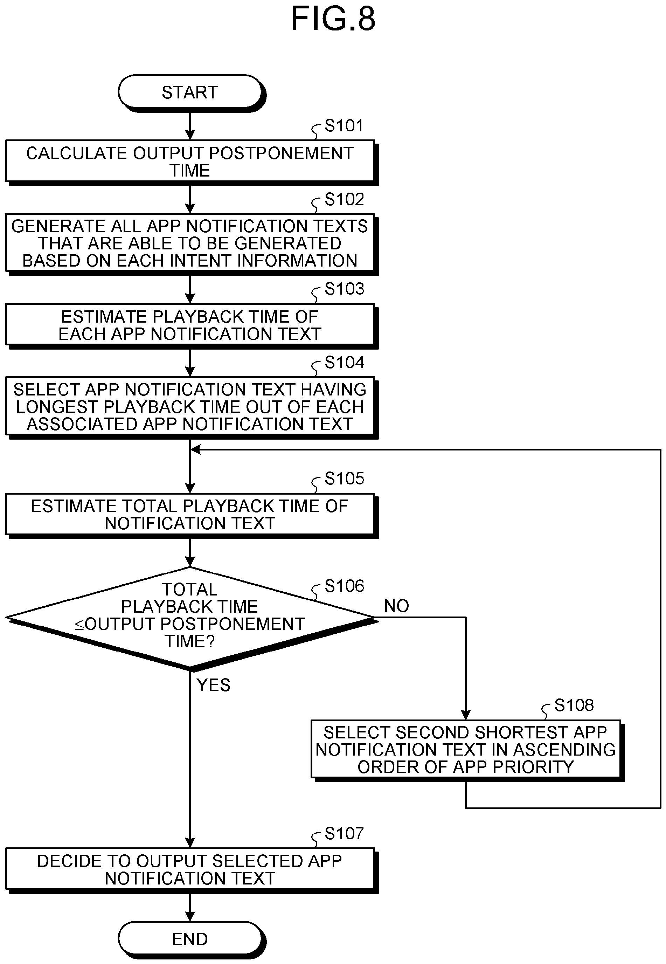

In the following, the flow of information processing according to the embodiment will be described with reference to FIG. 8. FIG. 8 is a flowchart illustrating an example of the information processing according to the embodiment. In the example illustrated in FIG. 8, the calculation unit 162 included in the information processing apparatus 100 calculates the output postponement time that is the remaining time before an arrival of the output postponement timing (Step S101).

The generation unit 163 included in the information processing apparatus 100 generates, on the basis of each of the pieces of intent information acquired from each of the applications, all of the app notification texts that are able to be generated (Step S102). If the generation unit 163 has generated all of the app notification texts that are able to be generated, the generation unit 163 estimates the playback time of each of the app notification texts (Step S103).

If the generation unit 163 estimates the playback time of each of the app notification texts, the generation unit 163 selects the app notification text in which the playback time is the longest out of each of the app notification texts (Step S104). If the generation unit 163 selects the app notification text in which the playback time is the longest out of the app notification texts, the generation unit 163 estimates the total playback time of the notification text that includes all of the selected app notification texts (Step S105). Subsequently, the generation unit 163 determines whether or not the total playback time of the notification text is less than or equal to the output postponement time (Step S106).

If the generation unit 163 determines that the total playback time of the notification text is less than or equal to the output postponement time (Yes at Step S106), the generation unit 163 decides to output the selected app notification text (Step S107). If the generation unit 163 decides to output the selected app notification text, the generation unit 163 generates the notification text that includes all of the selected app notification texts.

In contrast, if the generation unit 163 determines that the total playback time of the notification text is not less than or equal to the output postponement time (No at Step S106), the generation unit 163 sequentially selects the second shortest app notification text in ascending order of the app priority (Step S108). If the generation unit 163 selects the second shortest app notification text in ascending order of the app priority, the generation unit 163 estimates the total playback time of the notification text that includes all of the selected app notification text (Step S105).

### 5. Modification

### 5-1. Addition of information based on priority

In the embodiment described above, a case has been described as an example in which the generation unit 163 generates the tentative notification text including the plurality of character strings each having a different content priority, and, if the playback time of the tentative notification text extends the output postponement time, the generation unit 163 sequentially deletes the character strings in each of which the content priority is lower out of the plurality of character strings included in the tentative notification text, and generates the notification text that is able to be played back within the output postponement time; however, a method of generating the notification text is not limited to this.

Specifically, the generation unit 163 generates, with priority, a tentative notification text that includes a character string that has a higher content priority out of the plurality of character strings each having a different content priority, and, if the total playback time of the tentative notification text does not exceed the output postponement time, the generation unit 163 generates a notification text that is able to be played back within the output postponement time by adding a character string that has a lower content priority than the character strings that are included in the tentative notification text.

For example, the generation unit 163 generates, on the basis of the intent information T1 that is illustrated in FIG. 5 and that has been acquired from the application #1, the two app notification texts #11' and #11 indicating that "make a right turn at the next intersection" (playback time of 2 seconds) and "please make a right turn at the next intersection" (playback time of 2.5 seconds), respectively, both of which include only the character string that has the content priority of "1". At this time, if the output postponement time is 7 seconds, the total playback time of the tentative notification text does not exceed the output postponement time, so that the generation unit 163 generates the notification text that is able to be played back within the output postponement time by adding the character string that has the content priority of "2" that is lower than the content priority of the character string included in the tentative notification text. For example, the generation unit 163 generates the notification text that is able to be played back within the output postponement time indicating that "please make a right turn at the next intersection. Please run on the innermost lane." (playback time of 6 seconds) by adding the character string that has a lower content priority of "2" to the character string that has the content priority of "1".

Furthermore, in the embodiment described above, a case has been described as an example in which the generation unit 163 generates the tentative notification text that includes the plurality of app notification texts each having a different app priority (or, the notification priority or the overall priority may be possible), and if the total playback time of the tentative notification text exceeds the output postponement time, the generation unit 163 generates the notification text that is able to be played back within the output postponement time by sequentially shortening the length of the app notification texts in ascending order of the app priority (or, a notification priority or an overall priority may be possible) out of the plurality of app notification texts that are included in the tentative notification text; however, a method of generating the notification text is not limited to this.

Specifically, the generation unit 163 generates the tentative notification text that includes, with priority, the app notification text that has a higher app priority (or, a notification priority or an overall priority may be possible) out of the plurality of app notification texts each having a different app priority (or, a notification priority or an overall priority may be possible), and, if the total playback time of the tentative notification text does not exceed the output postponement time, the generation unit 163 generates the notification text that is able to be played back within the output postponement time by adding the app notification text that has a lower app priority (or, a notification priority or an overall priority may possible) than the app priority of the app notification text included in the tentative notification text.

For example, the generation unit 163 generates the tentative notification text that includes, with priority, the app notification texts #1 to #3 that have the app priorities of "1" to "3", respectively, out of the app notification text #1 that has the app priority of "1", the app notification text #2 that has the app priority of "2", the app notification text #3 that has the app priority of "3", the app notification text #4 that has the app priority of "4", and ... ,. Subsequently, if the total playback time of the tentative notification text that includes all of the app notification texts #1 to #3 does not exceed the output postponement time, the generation unit 163 generates the notification text that is able to be played back within the output postponement time by adding, to the tentative notification text, the app notification text #4 that has the app priority of "4" that is lower than the app priorities of the app notification texts that are included in the tentative notification text.

### 5-2. Deletion of information based on priority

Furthermore, in the embodiment described above, a case has been described as an example in which the generation unit 163 generates a tentative notification text that includes a plurality of app notification texts each having a different app priority (or, a notification priority or an overall priority may be possible), and, if the total playback time of the tentative notification text exceeds the output postponement time, the generation unit 163 generates the notification text that is able to be played back within the output postponement time by sequentially shortening the length of the app notification texts in ascending order of the app priority (or, a notification priority or an overall priority may be possible) out of the plurality of app notification texts that are included in the tentative notification text; however, the method of generating the notification text is not limited to this.

Specifically, the generation unit 163 generates the tentative notification text that includes a plurality of app notification texts each having a different app priority (or, a notification priority or an overall priority may be possible), and, if the total playback time of the tentative notification text exceeds the output postponement time, the generation unit 163 generates the notification text that is able to be played back within the output postponement time by sequentially deleting app notification texts in ascending order of the app priority (or, the notification priority or the overall priority may be possible) out of the plurality of app notification texts that are included in the tentative notification text.

For example, the generation unit 163 generates the tentative notification text that includes the app notification text #1 that has the app priority of "1", the app notification text #2 that has the app priority of "2", the app notification text #3 that has the app priority of "3", and an app notification text #4 that has the app priority of "4". Subsequently, if the total playback time of the tentative notification text exceeds the output postponement time, the generation unit 163 generates the notification text that is able to be played back within the output postponement time by sequentially deleting the app notification text #4 that has the app priority of "4" that is the lowest app priority out of the plurality of app notification texts that are included in the tentative notification text.

### 5-3. Generation process of intent information

Furthermore, in the embodiment described above, a case has been described as an example in which the intent generation unit 132 generates the app notification text and generates the intent information on the basis of the generated app notification text; however, the method of generating the intent information is not limited to this. Specifically, the intent generation unit 132 may generate the intent information on the basis of the status information that has been acquired from the information processing apparatus 100. For example, the intent generation unit 132 generates the pieces of intent information T1 to T3 illustrated in FIG. 5 to FIG. 7, respectively, on the basis of the status information that includes the guidance route information, the location information, or the like acquired from the information processing apparatus 100. Then, the transmission unit 133 transmits the intent information generated by the intent generation unit 132 to the information processing apparatus 100.

### 5-4. Process of changing priority information

Furthermore, in the embodiment described above, an example in which the information processing apparatus 100 generates the notification text on the basis of the content priority information, the notification priority information, the app priority information, or the overall priority information that is acquired from the application device 10 has been described; however, the example is not limited to this. Specifically, when the generation unit 163 included in the information processing apparatus 100 generates the notification text, the generation unit 163 may add a change to the content priority, the notification priority, the app priority, or the overall priority on the basis of a past notification history, the attribute information on a user, the interest and attention information, the fellow passenger information, and the status information. For example, on the basis of the past notification history, the attribute information on a user, the interest and attention information, the fellow passenger information, and the status information, the generation unit 163 may assign a weight to the information (for example, a character string) indicating that a user is highly likely to be interested in such that the priority becomes higher in accordance with the weight. Furthermore, for example, on the basis of the history in which no reaction was received with respect to a notification (without stopping by a site or no reaction was received within a response time), the generation unit 163 may assign a weight so as to decrease the notification priority related to the notification from which no reaction was received with respect to the past notification. The generation unit 163 generates the notification text on the basis of the weighted content priority, the weighted notification priority, the weighted app priority, or the weighted overall priority.

### 6. Effects

As described above, the application device 10 according to the embodiment includes the intent generation unit 132 and the transmission unit 133. The intent generation unit 132 generates the intent information that includes the character string information that indicates the character string constituting the notification text that is output, as a voice output, to a driver of a moving object and the aiming information that indicates the type of a notification that is set in each of the character strings. The transmission unit 133 transmits the intent information to the information processing apparatus 100 that generates the notification text on the basis of the intent information.

In this way, the application device 10 provides, to the information processing apparatus 100 that generates the notification text, the intent information that is metadata information associated with the information related to a notification text, instead of providing a fixed notification text. Accordingly, the application device 10 enables the information processing apparatus 100 to generate a notification text such that the information processing apparatus 100 is able to finish delivering the information that is included in the notification text and that is needed for a driver of a moving object within a desired period of time in accordance with the status information. Therefore, the application device 10 enables the information needed for the driver of the moving object to be appropriately delivered.

Furthermore, the intent generation unit 132 generates the intent information that further includes the content priority information that indicates the content priority that is set in each of the character strings.

As a result, the application device 10 enables the information processing apparatus 100 to generate the notification text such that the information processing apparatus 100 is able to appropriately deliver, in accordance with the content priority, the information that is needed for the driver of the moving object.

Furthermore, the intent generation unit 132 generates the intent information that further includes the notification priority information that indicates the notification priority that is set in each of the pieces of intent information.

As a result, the application device 10 enables the notification text to be generated such that the notification text is able to appropriately deliver, in accordance with the notification priority, the information that is needed for the driver of the moving object.

Furthermore, the intent generation unit 132 generates the intent information that further includes the app priority information that indicates the app priority that is set in each of the applications each of which generates the intent information.

As a result, the application device 10 enables the notification text to be generated such that the notification text is able to appropriately deliver, in accordance with the app priority, the information that is needed for the driver of the moving object.

Furthermore, the intent generation unit 132 generates the app notification text related to the notification and generates the intent information on the basis of the generated app notification text. For example, the intent generation unit 132 generates the intent information that includes the character string extracted from the app notification text.

As a result, the application device 10 enables the intent information to be generated by effectively using the app notification text that is generated by an existing application.

Furthermore, the application device 10 further includes the acquisition unit 131. The acquisition unit 131 acquires the machine learning model that outputs the intent information in response to an input of the app notification text. For example, the acquisition unit 131 acquires the machine learning model that has been learned on the basis of the learning data that includes a combination of the app notification text and the intent information. The intent generation unit 132 generates the intent information by inputting the app notification text to the machine learning model.

As a result, the application device 10 is able to generate an appropriate intent information from the app notification text without relying on a workforce.

### 7. Program

The process performed by the application device 10 described above is implemented by an information processing program according to the present application. For example, the intent generation unit 132 included in the application device 10 is implemented by, the CPU, the MPU, or the like included in the application device 10, the information processing program executing, in a RAM as a work area, the procedures of the information processing program. For example, the intent generation unit 132 included in the application device 10 is implemented by, the CPU, the MPU, or the like included in the application device 10, executing, in a RAM as a work area, the information processing program corresponding to the information processing procedure related to the process of, for example, generating the intent information according to the information processing program. The other units included in the application device 10 are similarly implemented by executing each of the procedures by the information processing program.

### 8. Hardware configuration

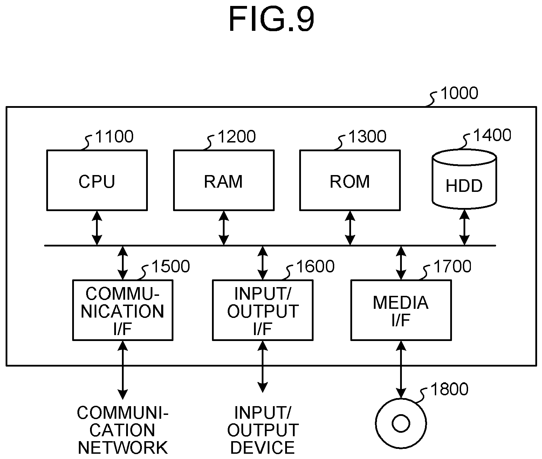

Furthermore, the application device 10 or the information processing apparatus 100 according to the embodiment described above is implemented by a computer 1000 that has the configuration illustrated in, for example, FIG. 9. FIG. 9 is a hardware configuration diagram illustrating an example of a computer that implements the function of the application device 10 or the information processing apparatus 100. The computer 1000 includes a CPU 1100, a RAM 1200, a ROM 1300, an HDD 1400, a communication interface (I/F) 1500, an input/output interface (I/F) 1600, and a media interface (I/F) 1700.

The CPU 1100 operates on the basis of the program stored in the ROM 1300 or the HDD 1400, and performs control of each of the units. The ROM 1300 stores therein a boot program that is executed by the CPU 1100 at the time of starting up the computer 1000, a program that depends on the hardware of the computer 1000, and the like.

The HDD 1400 stores therein the program executed by the CPU 1100, data that is used by the program, and the like. The communication interface 1500 receives data from another device via a predetermined communication network, sends the received data to the CPU 1100, and transmits the data generated by the CPU 1100 to the other device via the predetermined communication network.

The CPU 1100 controls an output device, such as a display or a printer, and an input device, such as a keyboard or a mouse, via the input/output interface 1600. The CPU 1100 acquires data from the input device via the input/output interface 1600. Furthermore, the CPU 1100 outputs the generated data to an output device via the input/output interface 1600. Furthermore, instead of the CPU 1100, a micro processing unit (MPU) may be used, or a graphics processing unit (GPU) may be used because a lot of calculation power is needed.

The media interface 1700 reads the program or the data stored in a recording medium 1800, and provides the read program or the data to the CPU 1100 via the RAM 1200. The CPU 1100 loads the program into the RAM 1200 from the recording medium 1800 via the media interface 1700, and executes the loaded program. The recording medium 1800 is, for example, an optical recording medium, such as a digital versatile disc (DVD) or a phase change rewritable disk (PD), a magneto-optical recording medium, such as a magneto-optical disk (MO), a tape medium, a magnetic recording medium, a semiconductor memory, or the like.

For example, if the computer 1000 functions as the application device 10 or the information processing apparatus 100, the CPU 1100 included in the computer 1000 implements the function of the control unit 13 or the control unit 160 by executing the program loaded into the RAM 1200. The CPU 1100 included in the computer 1000 reads these programs from the recording medium 1800 and executes the programs; however, as another example, the CPU 1100 may acquire these programs from another device via the predetermined communication network.

In the above, embodiments of the present invention have been described in detail on the basis of the drawings; however the embodiments are described only by way of an example. In addition to the embodiments described in disclosure of invention, the present invention can be implemented in a mode in which various modifications and changes are made in accordance with the knowledge of those skilled in the art.

### 9. Others

Furthermore, of the processes described in the embodiment and the modification, the whole or a part of the processes that are mentioned as being automatically performed can also be manually performed, whereas the whole or a part of the processes that are mentioned as being manually performed can also be automatically performed using known methods. Furthermore, the flow of the processes, the specific names, and the information containing various kinds of data or parameters indicated in the above specification and drawings can be arbitrarily changed unless otherwise stated. For example, the various kinds of information illustrated in each of the drawings are not limited to the information illustrated in the drawings.

Furthermore, the components of each unit illustrated in the drawings are only for conceptually illustrating the functions thereof and are not always physically configured as illustrated in the drawings. In other words, the specific shape of a separate or integrated device is not limited to the drawings. Specifically, all or part of the device can be configured by functionally or physically separating or integrating any of the units depending on various loads or use conditions.

Furthermore, the embodiments and the modification described above can be appropriately used in combination as long as the processes do not conflict with each other.

Furthermore, the "components (sections, modules, units)" described above can be read as "means", "circuits", or the like. For example, the acquisition unit can be read as an acquisition means or an acquisition circuit.

### Reference Signs List

- 1: information processing system
- 10: application device
- 11: communication unit
- 12: storage unit
- 13: control unit
- 131: acquisition unit
- 132: intent generation unit
- 133: transmission unit
- 100: information processing apparatus
- 110: communication unit
- 120: storage unit
- 130: sensor unit
- 140: voice output unit
- 150: voice recognition unit
- 160: control unit
- 161: acquisition unit
- 162: calculation unit
- 163: generation unit
- 164: decision unit
- 165: transmission unit

## Claims

1. An information processing program that causes a computer to execute a process comprising:
an intent generating step of generating intent information that includes
character string information that indicates a character string constituting a notification text that is output, as a voice output, to a driver of a moving object, and
aiming information that indicates a type of a notification and that is set in each of the character strings; and
a transmitting step of transmitting the intent information to an information processing apparatus that generates the notification text based on the intent information.

2. The information processing program according to claim 1, wherein the intent generating step includes generating the intent information that further includes content priority information that indicates a content priority that is set in each of the character strings.

3. The information processing program according to claim 1 or 2, wherein the intent generating step includes generating the intent information that further includes notification priority information that indicates notification priority that is set in each of the pieces of intent information.

4. The information processing program according to any one of claims 1 to 3, wherein the intent generating step includes generating the intent information that further includes app priority information that indicates an app priority that is set in each of applications for generating the intent information.

5. The information processing program according to any one of claims 1 to 4, wherein the intent generating step includes generating an app notification text related to the notification and generating the intent information based on the generated app notification.

6. The information processing program according to claim 5, wherein the intent generating step includes generating the intent information that includes the character string that is extracted from the app notification text.

7. The information processing program according to claim 5 or 6, further comprising an acquiring step of acquiring a machine learning model that outputs the intent information in response to an input of the app notification text, wherein
the intent generating step includes generating the intent information by inputting the app notification text to the machine learning model.

8. The information processing program according to claim 7, wherein the acquiring step includes acquiring the machine learning model that has been learned based on learning data that includes a combination of the app notification text and the intent information.

9. An information processing method performed by an information processing apparatus, the information processing method comprising:
an intent generating step of generating intent information that includes
character string information that indicates a character string constituting a notification text that is output, as a voice output, to a driver of a moving object, and
aiming information that indicates a type of a notification and that is set in each of the character strings; and
a transmitting step of transmitting the intent information to an information processing apparatus that generates the notification text based on the intent information.

10. A storage medium having stored therein an information processing program that causes a computer to execute a process comprising:
an intent generating step of generating intent information that includes
character string information that indicates a character string constituting a notification text that is output, as a voice output, to a driver of a moving object, and
aiming information that indicates a type of a notification and that is set in each of the character strings; and
a transmitting step of transmitting the intent information to an information processing apparatus that generates the notification text based on the intent information.

11. An application device comprising:
an intent generation unit that generates intent information that includes
character string information that indicates a character string constituting a notification text that is output, as a voice output, to a driver of a moving object, and
aiming information that indicates a type of a notification and that is set in each of the character strings; and
a transmission unit that transmits the intent information to an information processing apparatus that generates the notification text based on the intent information.

12. A data structure that is used for a process of generating a notification text performed by an information processing apparatus including a generation unit that generates the notification text that is output, as a voice output, to a driver of a moving object, the data structure comprising:
character string information that indicates a character string constituting the notification text; and
aiming information that indicates a type of a notification and that is set in each of the character strings, wherein
the data structure causes the generation unit to generate
length information on a length needed for the notification based on the character string information and the aiming information and
the notification text based on
the length information on the length needed for the notification, and
an output postponement timing that indicates a timing at which the notification of the notification text is to be completed.
